(19) **Europäisches Patentamt**
**European Patent Office**
**Office européen des brevets**

(11) **EP 2 307 769 B1**

(12) **EUROPEAN PATENT SPECIFICATION**

(45) Date of publication and mention
of the grant of the patent:
**23.10.2013  Bulletin 2013/43**

(51) Int Cl.:
**F16H 61/662** (2006.01)

(21) Application number: **08774548.5**

(22) Date of filing: **30.06.2008**

(86) International application number:
**PCT/EP2008/058395**

(87) International publication number:
**WO 2010/000301 (07.01.2010 Gazette 2010/01)**

(54) **METHOD FOR CONTROLLING A FRICTION TRANSMISSION SUCH AS A FRICTION CLUTCH OR A CONTINUOUSLY VARIABLE TRANSMISSION**

STEUERUNGSVERFAHREN FÜR EIN REIBGETRIEBE WIE EINE REIBKUPPLUNG ODER EIN STUFENLOS VERSTELLBARES GETRIEBE

PROCÉDÉ DE COMMANDE D'UNE TRANSMISSION À FRICTION TELLE QU'UN EMBRAYAGE À FRICTION OU UNE TRANSMISSION À VARIATION CONTINUE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**13.04.2011  Bulletin 2011/15**

(73) Proprietor: **Robert Bosch GmbH**
**70442 Stuttgart (DE)**

(72) Inventors:
• **VAN DER NOLL, Erik**
**NL-3311 TX Dordrecht (NL)**

• **VAN DER SLUIS, Francis, Maria, Antonius**
**NL-5271 HP Sint-Michielsgestel (NL)**
• **VAN DONGEN, Antonius, Adrianus, Helena, Maria**
**NL-5126 PS Gilze (NL)**

(74) Representative: **Plevier, Gabriel Anton Johan Maria**
**Bosch Transmission Technology B.V.**
**PO Box 500**
**5000 AM Tilburg (NL)**

(56) References cited:
**EP-A- 1 236 935        DE-A1- 10 050 218**
**DE-A1-102005 053 457**

EP 2 307 769 B1

## Description

The present invention relates to a method for controlling a friction transmission such as a friction clutch or a continuously variable transmission or CVT, which transmission types are typically applied in a drive line between an engine or motor and a load such as the driven wheels of a motorised vehicle. Such a method is known from EP 1 236 935 which discloses the features of the preamble of claim 1. These known transmissions include two friction surfaces that can be brought into engagement, i.e. into frictional contact, whereby a normal force is effected there between, i.e. a force oriented predominantly perpendicular thereto. Hereby, at least one, i.e. rotationally driving friction surface is arranged rotatable, such that it can exert a tangentially oriented friction or driving force on the respective other one, rotationally driven friction surface.

It is well-known that -at least by approximation- the maximum friction force $Fw_{MAX}$ that can be exerted in the said frictional contact is linearly dependent on the said normal force Fn according to:

$$Fw_{MAX} = \mu \cdot Fn$$

wherein the parameter $\mu$ is the coefficient of friction that depends on many system parameters, such as the material and roughness of the friction surfaces, the presence and type of lubricant in the frictional contact, the temperature, etc.

In the friction transmission with rotationally arranged friction surfaces, the friction force Fw is effected by, or results in a drive torque T according to:

$$T = Fw \cdot R_{EFF}$$

wherein $R_{EFF}$ denotes the radius at which the contact between the rotating friction surfaces takes place, at least effectively.

Based on the above-equations it can be derived that in order for the friction transmission to be able to transmit the drive torque T, a minimum normal force $Fn_{MIN}$ is required according to:

$$Fn_{MIN} = \frac{T}{\mu \cdot R_{EFF}}$$

Typically, however, the normal force level Fn that is actually applied in the transmission will be set considerably in excess of the such minimum required value thereof $Fn_{MIN}$, because an insufficient normal force will result in a (rotational) speed difference, i.e. a mutual tangential movement or slip between the friction surfaces, which in turn adversely results in energy, i.e. efficiency loss and possibly, i.e. in case of excessive slip, in damage to the friction surfaces. For example, the normal force Fn may be set to a fixed level that is sufficient for allowing the transmission to reliably transmit the maximum drive torque T that occurs during normal operation.

Alternatively, the applied normal force Fn is adapted to, i.e. is actively controlled in relation to the instantaneous level of the drive torque T as increased by a safety factor Sf, e.g. according to:

$$Fn_{ACT} = \frac{T}{\mu \cdot R_{EFF}} \cdot Sf$$

Such safety factor Sf is larger than 1, typically has a value between 1 and 2, and is incorporated to account for inaccuracies in the measured or estimated value of the other parameters in the equation. The advantage of this latter method over applying a fixed normal force Fn is that, typically, the durability as well as the overall efficiency of the transmission is improved thereby.

Inter alia it is remarked that the said normal force may in a practical transmission design be realised only indirectly, i.e. as a component of another force that is oriented at an angle (i.e. rather than perpendicular) relative to a plane wherein the said friction surfaces lie.

Yet a further method for controlling the applied normal force is described in the non- prepublished international patent application number EP2008/053548. In relation to the well known belt- and- pulley- type CVT, comprising two pulleys that are both in (separate) frictional contact with a flexible drive belt of the transmission, which belt is arranged around and between the pulleys thus providing a driving connection there between, it is described therein to correlate natural fluctuations or a forced oscillation of the normal force in one of the pulley- belt contacts to the resulting fluctuations or oscillations of the speed ratio of the transmission, i.e. the ratio between the rotational speed of an input or driving pulley and the rotational speed of an output or driven pulley thereof. This latter control method is to be favoured principally, since thereby the normal force that is actually applied in the pulley- belt contact is controlled to a minimally required level directly in relation to the drive torque, however, without the need to actually measure such drive torque. As a result, this control method can be easily adjusted in response to the instantaneously detected or predetermined operational conditions of the transmission. Further, the algorithm and the measurement means or sensors required for this control method are relatively uncomplicated and/or are readily available and may thus be implemented in a cost effective manner.

An analysis of the physical phenomenon underlying the above control method suggests that it relies on the occurrence of a local minimum in the relationship between the effective, i.e. mean or (time) average level of the normal force applied at one pulley, i.e. in one of the pulley-belt contacts of the transmission, and the resulting speed ratio, at least for given and constant, i.e. fixed values of the drive torque and of the quotient between the effective normal forces applied in the respective pulley-belt contacts. The occurrence of the said minimum (or maximum, should the speed ratio be defined inversely, i.e. as the rotational speed of the output shaft divided by the rotational speed of the input shaft) is considered to result from the combined influence of two, mutually counteracting physical effects.

On the one hand, the speed ratio shows the tendency to increase as the normal force is increased and vice versa, which behaviour is attributed to the finite stiffness and associated elastic deformation of certain transmission parts. On the other hand, below a certain threshold value or transition range of values of the normal force and as the normal force is decreased further, the speed ratio likewise shows the tendency to increase and vice versa. This latter behaviour is attributed to the said tangential slip that occurs in one of the pulley-belt contacts at and in dependency on such low normal force level.

In combination the above two effects thus produce a mutual dependency between the said effective normal force and the speed ratio that, in a graphical representation thereof, describes an at least generally concavely shaped curve. Such curve thus defines an increasing speed ratio in relation to both an increasing and a decreasing normal force, between which extremes, at a specific level of the normal force, a minimum value of the speed ratio occurs. The above control method is arranged to control the actually applied normal force to coincide with the said specific level thereof, at which specific level a very good, if not optimum transmission efficiency was found to occur.

It may thus be summarised that the above control method relies on the existence of a- noticeable- minimum (or maximum) in the above- described dependency between the effective normal forces and the resulting speed ratio. Thus, at first sight, this control method appears unsuitable for certain types of frictional torque transmissions such as a (friction plate) clutch that obviously do not provide a varying, i.e. increasing speed ratio in relation to an increasing normal force in the frictional contact between the friction surfaces or clutch plates thereof. Moreover, it is conceivable that even in the belt- and- pulley- type CVT operational conditions occur, wherein the said local minimum does not- noticeably-occur or possibly does not coincide with the said optimum transmission efficiency.

According to the present invention the former limitation of the above control method may be removed or at least limited by adapting the physical system parameter of the speed ratio of the transmission by a numeric factor that is related to the effective normal force that is instantaneously prevailing in the frictional contact. The thus resulting virtual parameter value, which is denoted the factored speed ratio hereinafter, is then correlated to the normal force to find the local minimum in the dependency between these latter two parameters in the above-described manner.

For example, the said factored speed ratio may be calculated by multiplying the speed ratio with the normal force level itself. It is evident that, as a result, the factored speed ratio shows the tendency to increase as the normal force increases, at least for a comparatively high level of the normal force in which condition no, or at least virtually no slip occurs. According to the invention several other options, i.e. numeric factors, for adapting the speed ratio are available, each with its own technical merit.

Further, even if the said dependency does show a local minimum, it may simply be desired to improve the response of the presently considered control method, in particular in counteracting large deviations on the high side of the normal force, i.e. to rapidly counteract such deviations. The measure according to the present invention can also be implemented for this latter purpose, especially if the above adaptation factor is set to depend on the normal force in a non- linear proportional relationship. The invention will now be elucidated further along the drawing figures, whereof:

figure 1 provides a basic layout of a known type of continuously variable transmission with two pulleys and a drive belt,
figure 2 provides a cross-section in longitudinal direction of the drive belt,
figure 3 illustrates the currently considered control method by way of a block diagram,
figure 4 illustrates the physical behaviour of the known transmission on which the currently considered control method relies by way of a graph,
figure 5 provides a schematic representation of a hydraulically operated clutch that is known per se and that is typically found in an automotive drive train provided with an automatic transmission, such as the continuously variable transmission,
figure 6 illustrates the corresponding physical behaviour of the known clutch by way of a graph,
figure 7 illustrates the transmission control method according to the present invention by way of a block diagram, and whereof
figure 8 illustrates the transmission control method according to the present invention by way of a graph.

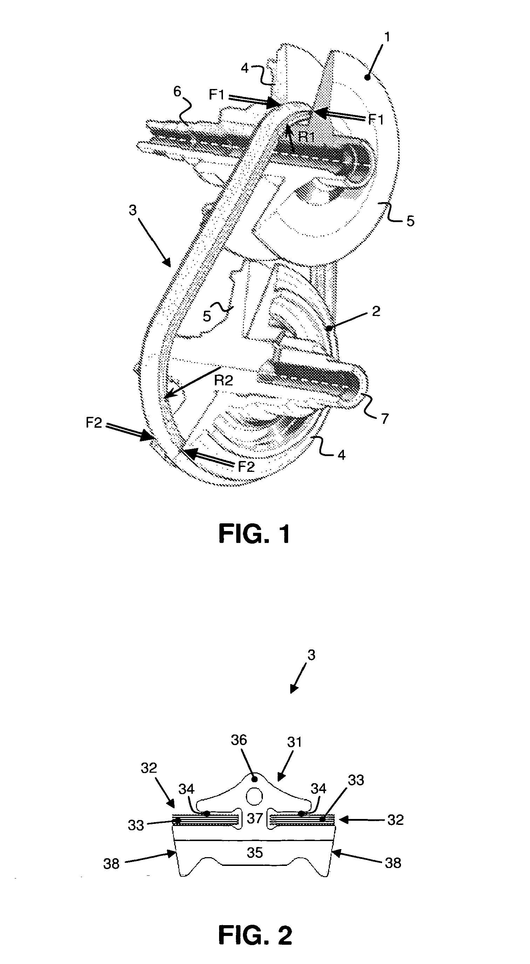

Figure 1 provides a perspective view of the basic parts of the known continuously variable transmission or CVT that comprises two pulleys 1, 2 and a drive belt 3 that is wrapped around and in frictional contact with the pulleys 1, 2. The pulleys 1, 2 are each provided with two conical discs 4, 5 on a respective pulley shaft . 6 or 7, between which discs 4, 5 a tapered groove of variable width is defined that accommodates a part of the drive belt 3 that is bent in its longitudinal direction, whereby an effective radius of contact R1, R2 exists there between. At least one disc 4 of each pulley 1 and 2 is axially movable towards the respective other disc 5, e.g. by means of a piston/cylinder-assembly (not shown) that associated with each respective pulley, for exerting a respective axially oriented clamping force F1, F2 on the belt 3. Because of the conical shape of the pulley discs 4, 5 these clamping forces F1, F2 are split in a first force component perpendicular or normal to the frictional contact between belt 3 and pulleys 1, 2 and a radially oriented second component by which the belt 3 is tensioned. The level of a respective normal force component Fn1, Fn2 determines the driving force that can be transferred between the belt 3 and the respective pulley 1 or 2 by means of friction, whereas the ratio Fn1/Fn2 there between determines and is used to control the effective contact radii R1 and R2 between the belt 3 and the respective pulleys 1 and 2. In figure 1 the CVT is depicted in the largest possible speed ratio $\omega1/\omega2$ that is defined as the quotient of a transmission input speed $\omega1$ (i.e. the rotational speed $\omega1$ of an input shaft 6 and of the associated, i.e. input pulley 1) and of a transmission output speed $\omega2$ (i.e. the rotational speed $\omega2$ of an output shaft 7 and of the associated, i.e. output pulley 2). The clamping forces F1, F2 and thus also the normal force components Fn1, Fn2 thereof are realised by exerting a respective hydraulic cylinder pressure P1, P2 in the piston/cylinder-assembly associated with the axially moveable discs 4 of a respective pulley 1, 2. This type of transmission and its operation and control are all well known in the art.

In figure 2 an example of the drive belt 3 shown in a longitudinal cross-section thereof. The drive belt 3 of figure 2 is of the known, so-called pushbelt or Van Doorne type. The pushbelt 3 comprises an endless tensile body 32, which is composed of two sets of a number of mutually 'nested', i.e. radially stacked, flat metal rings 33, and a number of metal segments 31, the so-called transverse elements 31 of the belt 3. The sets of rings 33 are each mounted in a respective recess or slot 34 of the transverse elements 31, allowing the elements 31 to slide along the circumference of the tensile body 32. Each such slot 34 is provided on and opens towards a lateral side of the transverse element 31 in-between an effectively trapezoid-shaped lower part 35 and a more or less arrow-head shaped upper part 36 thereof. These upper and lower parts 35 and 36 are interconnected via a central pillar part 37 of the transverse element 31. The transverse elements 31 of the belt 3 arrive into contact with the pulleys 1 and 2 during operation of the CVT through lateral contact or friction surfaces 38 that are normally provided with a profile of alternating ridges and grooves (not shown).

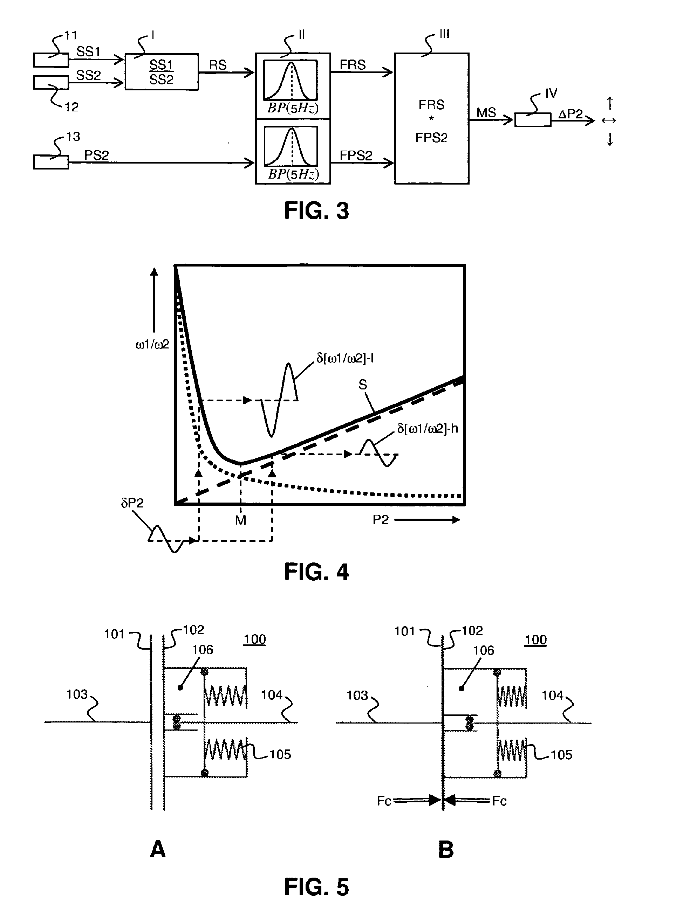

It is, amongst others, known to control the level of the above-mentioned clamping forces F1, F2 to the force levels that are respectively required to transmit a driving torque to be transmitted by the CVT. A favourable control method is provided by the non-prepublished international patent application number EP2008/053548, which method is illustrated in figure 3 and will be elucidated in the below in the preferred embodiment using the parameters of the speed ratio $\omega1/\omega2$ and the normal force Fn2 of the output pulley 2, the latter as represented by (i.e. directly proportional to) the hydraulic cylinder pressure P2 exerted in the piston/cylinder-assembly of the output pulley 1, 2, hereinafter referred to as the output pulley pressure P2.

It is shown in figure 3 that the currently considered control method scheme typically requires three sensors 11, 12 and 13. The first sensor 11 detects the transmission input speed $\omega1$ and generates a respective first speed parameter signal SS1 (e.g. an electronic current, voltage, frequency and/or amplitude) that is proportional thereto. The second sensor 12 detects the transmission output speed $\omega2$ and generates a respective second speed parameter signal SS2 that is proportional thereto. The third sensor 13 detects the output pulley pressure P2 and generates a respective output pressure parameter signal PS2 that is proportional thereto. Indeed, this third sensor 13 may potentially be dispensed with, since the output pulley pressure P2 can usually be approximated fairly accurately by calculation, e.g. based on a pressure valve activation signal and the transmission output speed $\omega2$, however, for realising optimum control accuracy and operational reliability the use of the third sensor 13 is to be preferred.

Next, in block I of the control scheme, a transmission speed ratio signal RS is generated that is proportional to the ratio SS1/SS2 between the first speed signal SS1 and the second speed signal SS2 respectively.

Next, in block II, a signal component of a desired frequency or range of frequencies is generated based on both the transmission speed ratio signal RS and the output pressure signal PS2. More specifically, both said signals RS and PS2 are separately passed through a so-called band pass filter that filters out (i.e. allows to pass to the next block III) such signal component, in this particular example the 5 Hz frequency component. These filtered signals are hereinafter referred to as the filtered speed ratio signal FRS and the filtered output pressure signal FPS2 respectively. Of course, when the said output pressure PS2 is actively forced to oscillate at the above- mentioned desired frequency- in stead of relying on naturally occurring fluctuations therein-, the said filtered output pressure signal FPS2 may be generated simply by subtracting the effective, i.e. mean or (time) average level of the output pulley pressure level P2 from the instantaneous level thereof.

Next, in block III, a multiplication signal MS is generated that is proportional to the multiplication FRS*FPS2 of the filtered speed ratio signal FRS and the filtered output pressure signal FPS2. It is this multiplication signal MS or at least a characteristic thereof that is subsequently used to control the CVT, in particular to control the output pulley pressure P2, in which case the input pulley pressure P1 is obtained as a consequence of maintaining a desired transmission speed ratio dRS. To this end an appropriate control action ΔP2 is generated in block IV, which action ΔP2 consists of either increasing "↑", maintaining "↔" or decreasing "↓" a current output pulley pressure P2 level. Said characteristic can simply be the sign of the multiplication signal MS (i.e. positive, negative or zero), but preferably the (magnitude of the) control action ΔP2 is generated in relation to magnitude of multiplication signal MS that may be obtained by passing the multiplication signal MS through a low pass filter having an upper threshold frequency that is lower than the said target frequency of- in this example- 5 Hz of the band pass filter applied to the transmission speed ratio signal RS and the output pressure signal PS2, e.g. only 3 Hz.

The physical behaviour of the CVT whereon the currently considered control method relies is illustrated in figure 4. The curve S in the graph of figure 4, which is denoted the slip curve S hereinafter, provides the dependency between the transmission parameters of the speed ratio $\omega 1/\omega 2$ and of the normal force as represented by the output pulley pressure P2 for a constant drive torque and a constant quotient between the effective normal forces applied in the respective pulley-belt contacts. Such behaviour and the slip curve S result from the combination of two, mutually counteracting physical effects.

On the one hand, as the output pulley pressure P2 is increased, the speed ratio $\omega 1/\omega 2$ shows the tendency to also increase and vice versa, which behaviour is indicated in figure 4 by the dashed line and which behaviour is attributed to the elastic deformation of transmission parts, such as the pulley discs 4, 5, the pulley shafts 6, 7, the drive belt 3 and also the hydraulic control system of the transmission for generating and controlling the said pulley pressures P1, P2 (not shown). Accordingly, such elastic deformation is considered to include -and be partly determined by- the compressibility of the hydraulic fluid applied in such system.

On the other hand, as the output pulley pressure P2 is decreased, the speed ratio $\omega 1/\omega 2$ shows the tendency to increase instead and vice versa, which latter behaviour is indicated in figure 4 by the dotted line and may be attributed to a mutual movement or slip in the frictional contact between the pulleys and the drive belt, which slip rapidly tends towards infinity below a certain level of the output pulley pressure P2 and above such level tends towards zero at a more gradual rate. In combination the latter two physical effects thus produce a mutual dependency between the output pulley pressure P2 and the speed ratio $\omega 1/\omega 2$, as represented by the slip curve S in figure 4, that shows a minimum value of the speed ratio $\omega 1/\omega 2$ at a specific level of the output pulley pressure P2, at which specific level very little, if not minimal, friction losses occur.

In figure 4 also the effect of an, at least in this example, sinusoidal shaped variation of the output pulley pressure P2, i.e. a pressure excitation δP2, on the speed ratio $\omega 1/\omega 2$ is indicated, which pressure excitation δP2 may be naturally occurring or may be actively induced as part of the currently considered control method. Obviously, in the latter case, the pressure excitation δP2 is induced at a frequency corresponding to the filter frequency of the band pass filter of block II and preferably with an amplitude that is small in comparison with the effective level of the output pulley pressure P2, e.g. amount to only 10% or less.

From figure 4 it appears that for a comparatively low level of the output pulley pressure P2 (i.e. on the left side of the slip curve S), a sinusoidally oscillating pressure excitation δP2 results in a speed ratio response oscillation δ [$\omega 1/\omega 2$]- I of opposite sign, such that the said multiplication of these parameter oscillations δP2, δ [$\omega 1/\omega 2$], i.e. of the relevant parameter signals FPS2 and FRS thereof in block III, yields a negative multiplication parameter value (i.e. negative multiplication signal MS) . Instead, for a comparatively high level of the output pulley pressure P2 (i.e. more towards the right side of the slip curve S), the relevant pressure excitation δP2 results in a speed ratio response 8 [$\omega 1/\omega 2$]- h of the same sign, such that the said multiplication yields a positive value. Analogously, in the minimum M of the slip curve S hardly any speed ratio oscillation δ [$\omega 1/\omega 2$] will occur in response to a pressure oscillation δP2, such that the said multiplication yields a value of, or at least very close to, zero. Accordingly, in these circumstances, the said appropriate control action ΔP2 would be to raise the output pulley pressure P2 level if the said multiplication yields a negative value, to lower the output pulley pressure P2 level if the said multiplication yields a positive value and to leave the output pulley pressure P2 unchanged if the said multiplication yields a zero, or at least a negligible value.

It may be appreciated from the above that the currently considered control method relies on the slip curve S having a well defined minimum M (or maximum), i.e. being shaped generally concavely (or convexly as the case may be), which implies that it is inherently unsuitable for the control of other types of frictional torque transmissions, such as a friction brake of a friction (plate) clutch 100, as will be explained in the below with reference to figure 5. In figure 5 the known clutch device 100 is schematically represented both in a fully opened state A (fig. 5, left-hand side) and in a closed state B (fig. 5, right-hand side), in which latter, closed state B the clutch 100 may either be fully or partly closed. In the said fully opened state A, friction plates 101 and 102 of the clutch 100 are out of engagement, such that a rotation of or a torque exerted on a clutch input shaft 103 will not be transferred to an output shaft 104 thereof (and vice versa). Typically, a spring 105 is incorporated in the clutch 100 to maintain such fully opened state A. Further, a sealed pressure chamber 106 is provided, such that the friction plate 102 associated with the output shaft 104 can be axially displaced relative to the respective other friction plate 101.

By exerting a (hydraulic) clutch pressure Pc in the pressure chamber 106 the friction plate 102 that is associated with the output shaft 104 may be urged towards and brought into frictional contact with the friction plate 101 that is associated with the input shaft 103 (state B), whereby a normal force Fc is effected there between that depends on the clutch pressure Pc. Below a certain minimum or threshold level of the clutch pressure Pc in relation to a torque to be transmitted by the clutch 100, a slip will occur between the friction plates 101 and 102 thereof, in which case the clutch 100 is only partly closed and above such threshold force level the clutch will be fully closed, whereby the clutch plates 101 and 102 rotate integrally.

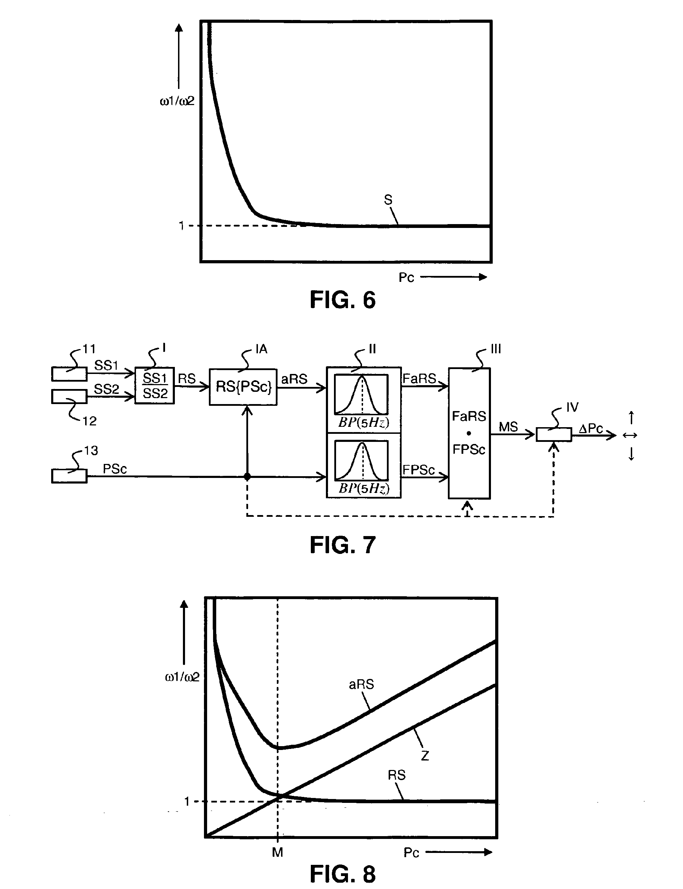

For such known friction clutch 100 the slip curve S, i.e. the dependency between the speed ratio $\omega 1/\omega 2$, i.e. the ratio between a rotational speed $\omega 1$, $\omega 2$ of the clutch input and output shafts 103, 104 respectively, and the clutch normal force Fc as represented by the clutch pressure Pc, which is illustrated in figure 6, differs from the slip curve S of the CVT. Most noticeable in this respect is of course that the clutch slip curve S extends virtually horizontally (i.e. assumes a speed ratio value of 1) for a comparatively high level of the clutch pressure Pc (i.e. more towards the right side of the slip curve S). Accordingly, in these circumstances, the presently considered control method does not function, at least not for lowering the clutch pressure Pc, since the said multiplication of a clutch pressure excitation $\delta Pc$ and a speed ratio response $\delta[\omega 1/\omega 2]$ will never yield a positive value that would be required thereto.

According to the present invention, however, the presently considered control method can be made favourably suitable for all types of frictional torque transmissions relatively easily, namely by adapting or scaling the physical system parameter of the speed ratio $\omega 1/\omega 2$ of the frictional torque transmission by a numeric factor that is related to the normal force Fn2, Fc that is actually prevailing in the frictional contact. The thus resulting virtual parameter value, which is denoted the factored speed ratio aRS hereinafter, is then simply substituted for the speed ratio $\omega 1/\omega 2$ in the presently considered control method.

The control method according to the invention may thus be implemented by adding a block IA after block I and before block II in the control scheme of the existing method as is illustrated in figure 7 specifically in relation to the clutch 100. In the said block IA the signal RS that represents the speed ratio $\omega 1/\omega 2$ is modified or adapted as a function of or in relation to the applied clutch pressure signal PSc ("RS {PSc} "), which signal is representative of the said actually prevailing normal force Fc, thus generating a factored ratio signal aRS. This factored ratio signal aRS is than filtered in block II to select the signal component FaRS of a desired frequency there from and in block III such first adapted and subsequently filtered ratio signal FaRS is multiplied by the filtered clutch pressure signal FPSc to create the multiplication signal MS for the control of the clutch pressure Pc.

Inter alia it is remarked that instead of or in addition to the ratio signal RS also the signal PS2 representing the normal force Fn2, Fc may be adapted in the above described manner. Moreover, since the signal adaptation in accordance with the invention is represented by a defined numeric operation, it may alternatively be performed -in an appropriately modified form- on the said multiplication signal MS, i.e. block IA will be omitted and the said signal adaptation will take place only in block IV after the filtering (block II) and multiplication operations (block III) have taken place, as is indicated in figure 7 by the dashed line.

According to the invention the factored ratio signal aRS may for example be determined by adding a adaptation factor Z to the speed ratio signal RS or by multiplying the latter with such factor Z that is related to, i.e. is a function of the normal force Fn (i.e. Fn2, Fc) in the frictional contact of the transmission, e.g. as represented by the level of the hydraulic pressure P (i.e. P2, Pc). In turn such adaptation factor Z may involve a mathematical function, e.g.:

$$Z=C1 \cdot P^{C2}+C3$$

with C1, C2 and C3 each representing a numeric value that may be constant or that may be varied in relation to an operational condition, such as the speed ratio $\omega 1/\omega 2$.

Indeed, within the concept of the present invention, any mathematical equation involving of the normal force could in principle be suitable for adapting the speed ratio signal RS, such that many different embodiments are conceivable, each with its own technical merit. For example in relation to the above control scheme for the clutch 100, the factored speed ratio aRS may be favourably determined by adding an adaptation factor Z that is proportional to the clutch pressure Pc to the real speed ratio RS:

$$aRS = RS + Z = RS + C1 \cdot Pc$$

As a result the factored speed ratio aRS does indeed increase as the clutch pressure increases, at least for a comparatively high level of the normal force in which condition the clutch speed ratio $\omega 1/\omega 2$ is equal to 1 and in which condition no, or at least virtually no slip occurs (e.g. amounting to less than 1% the absolute rotational speed of the clutch plates 101, 102).

In figure 8 all three above-mentioned parameters of the speed ratio signal RS, the adaptation factor Z and the factored speed ratio aRS are plotted as a function of the clutch pressure Pc, the latter parameter being representative of the normal force Fc in the frictional contact between the clutch plates 101, 102. It immediately follows that the resulting curve aRS shows the minimum that is required for the presently considered control method to "lock-in", i.e. whereto the clutch pressure Pc automatically converges, i.e. without a desired value being required for the control. Importantly, the thus synthesised virtual parameter of factored speed ratio aRS can even be positively related to the overall efficiency of the frictional torque transmission, i.c. the clutch 100, which overall efficiency is after all determined not only by the losses in the frictional contact thereof, but in part also by the energy required to generate the normal force Fn. In this latter respect it may be referred to efficiency losses due to leakage of pressurised hydraulic fluid and the energy consumed by the pump for generating the clutch pressure Pc.

Generally speaking, the said adaptation factor Z can be seen as a penalty function that brings into account indirect efficiency losses that are associated with the level of the normal force Fn in the frictional contact, in addition to the direct efficiency losses that are directly associated with the torque transfer in the said frictional contact as such, which direct losses are represented by the slip curve S. Accordingly, in a favourable embodiment of the present invention the said adaptation factor Z is chosen such that it accurately represents the said indirect efficiency losses in the frictional torque transmission.

**Claims**

1. Method for controlling a normal force exerted between two friction surfaces in a friction transmission including the steps of:

    - generating a first parameter signal that is representative of the magnitude of the rotational speed of one friction surface relative to the respective other one friction surface,
    - generating a second parameter signal that is representative of the magnitude of the said normal force, and **characterised by** the further steps of:
    - filtering out a first target frequency or range of target frequencies of both said first and second parameter signals,
    - generating a third parameter signal that is proportional to the multiplication of the filtered first and second parameter signals, and of
    - controlling the normal force in the frictional contact in dependence on a characteristic of the said third parameter signal,
    wherein either one or more of the first parameter signal, the filtered first parameter signal, the second parameter signal, the filtered second parameter signal or the third parameter signal is modified by an adaptation factor (Z), which adaptation factor (Z) is related to the magnitude of the said normal force.

2. The method according to claim 1, wherein a respective parameter signal is adapted by the adaptation factor (Z) either by multiplication or by addition.

3. The method according to claim 1 or 2, wherein the said adaptation factor (Z) is also related to the magnitude of the said rotational speed of one friction surface relative to the respective other one friction surface.

4. The method according to claim 1 or 2, wherein the first parameter signal is representative of the magnitude of the ratio between the rotational speeds of the friction surfaces and wherein the adaptation factor (Z) is added to the first parameter signal.

5. The method according to claim 3 or 4, wherein the said adaptation factor (Z) is representative of the energy required to generate the said normal force.

6. The method according to one or more of the preceding claims, wherein the said characteristic of the said third parameter signal is the sign (positive, negative or zero) and/or the magnitude of the progressive average thereof.

7. The method according to one or more of the preceding claims, wherein the said normal force is actively oscillated around an effective level thereof.

8. Method according to one or more of the preceding claims, wherein, prior to controlling the normal force in the frictional contact in dependence on a characteristic thereof, the said third parameter signal is adapted by adding a positive offset value or a negative offset value thereto.

9. Friction transmission equipped with means carrying out the method according to any one of the preceding claims.

10. Friction transmission controlled in accordance with the method according to any one of the claims 1-8.

**Patentansprüche**

1. Verfahren zum Steuern einer Normalkraft, die zwischen zwei Reibflächen in einer Reibungskraftübertragung ausgeübt wird, wobei das Verfahren die folgenden Schritte umfasst:

    - Erzeugen eines ersten Parametersignals, das die Größe der Drehzahl einer Reibfläche relativ zu der jeweils anderen Reibfläche darstellt,

- Erzeugen eines zweiten Parametersignals, das die Größe der Normalkraft darstellt, und **gekennzeichnet durch** die folgenden weiteren Schritte:

- Herausfiltern einer ersten Sollfrequenz oder eines Bereiches von Sollfrequenzen sowohl des ersten als auch des zweiten Parametersignals,

- Erzeugen eines dritten Parametersignals, das proportional zu dem Multiplikationsprodukt aus dem gefilterten ersten und dem gefilterten zweiten Parametersignal ist, und

- Steuern der Normalkraft in dem Reibkontakt in Abhängigkeit einer Eigenschaft des dritten Parametersignals,

wobei entweder ein oder mehrere Signale von dem ersten Parametersignal, dem gefilterten ersten Parametersignal, dem zweiten Parametersignal, dem gefilterten zweiten Parametersignal oder von dem dritten Parametersignal **durch** einen Anpassungsfaktor (Z), der mit der Größe der Normalkraft in Beziehung steht, modifiziert werden.

2. Verfahren nach Anspruch 1, wobei ein jeweiliges Parametersignal durch den Anpassungsfaktor (Z) entweder durch eine Multiplikation oder durch eine Addition angepasst wird.

3. Verfahren nach Anspruch 1 oder 2, wobei der Anpassungsfaktor (Z) auch mit der Größe der Drehzahl der einen Reibfläche relativ zu der jeweils anderen Reibfläche in Beziehung steht.

4. Verfahren nach Anspruch 1 oder 2, wobei das erste Parametersignal die Größe des Verhältnisses zwischen der Drehzahl der Reibflächen darstellt und wobei der Anpassungsfaktor (Z) zu dem ersten Parametersignal hinzugefügt wird.

5. Verfahren nach Anspruch 3 oder 4, wobei der Anpassungsfaktor (Z) die Energie darstellt, die erforderlich ist, um die Normalkraft zu erzeugen.

6. Verfahren nach einem der vorhergehenden Ansprüche, wobei die Eigenschaft des dritten Parametersignals sein Vorzeichen (positiv, negativ oder null) und/oder die Größe seines fortschreitenden Durchschnitts ist.

7. Verfahren nach einem der vorhergehenden Ansprüche, wobei die Normalkraft um ihren effektiven Pegel aktiv oszilliert.

8. Verfahren nach einem der vorhergehenden Ansprüche, wobei vor dem Steuern der Normalkraft in dem Reibkontakt in Abhängigkeit von einer Eigenschaft davon das dritte Parametersignal angepasst wird, indem ein positiver Versatzwert oder ein negativer Versatzwert hinzugefügt wird.

9. Reibungskraftübertragung, die mit Mitteln ausgerüstet ist, um das Verfahren nach einem der vorhergehenden Ansprüche auszuführen.

10. Reibungskraftübertragung, die gemäß dem Verfahren nach einem der Ansprüche 1 bis 8 gesteuert wird.

**Revendications**

1. Procédé pour commander une force normale appliquée entre deux surfaces de friction dans une transmission par friction, le procédé comprenant les étapes consistant à :

- générer un premier signal de paramètre représentant la grandeur de la vitesse de rotation d'une surface de friction donnée par rapport à l'autre surface de friction respective,

- générer un deuxième signal de paramètre représentant la grandeur de ladite force normale, et **caractérisé en ce qu'**il comprend les étapes supplémentaires consistant à :

- filtrer une première fréquence cible ou plage de fréquences cibles des deux dits premier et deuxième signaux de paramètre,

- générer un troisième signal de paramètre proportionnel à la multiplication des premier et deuxième signaux de paramètres filtrés, et

- commander la force normale dans le contact de friction en fonction d'une caractéristique dudit troisième signal de paramètre,

au moins un quelconque des premier signal de paramètre, premier signal de paramètre filtré, deuxième signal de paramètre, deuxième signal de paramètre filtré ou troisième signal de paramètre étant modifié par un facteur d'adaptation (Z), lequel facteur d'adaptation (Z) est lié à la grandeur de ladite force normale.

2. Procédé selon la revendication 1, dans lequel un signal de paramètre respectif est adapté par le facteur d'adaptation (Z) soit par multiplication, soit par addition.

3. Procédé selon la revendication 1 ou 2, dans lequel ledit facteur d'adaptation (Z) est également lié à la grandeur de ladite vitesse de rotation d'une surface de friction donnée par rapport à l'autre surface de friction respective.

4. Procédé selon la revendication 1 ou 2, dans lequel le premier signal de paramètre représente la grandeur du rapport entre les vitesses de rotation des surfaces de friction, et dans lequel le facteur d'adaptation (Z) est ajouté au premier signal de paramètre.

**5.** Procédé selon la revendication 3 ou 4, dans lequel ledit facteur d'adaptation (Z) représente l'énergie nécessaire à la génération de ladite force normale.

**6.** Procédé selon au moins une des revendications précédentes, dans lequel ladite caractéristique dudit troisième signal de paramètre correspond à son signe (positif, négatif ou nul) et/ou à la grandeur de sa moyenne progressive.

**7.** Procédé selon au moins une des revendications précédentes, dans lequel ladite force normale subit une oscillation active autour d'un niveau efficace de celle-ci.

**8.** Procédé selon au moins une des revendications précédentes, dans lequel, préalablement à l'étape consistant à commander la force normale dans le contact de friction en fonction d'une caractéristique dudit troisième signal de paramètre, ledit troisième signal de paramètre est adapté en lui ajoutant une valeur de décalage positive ou une valeur de décalage négative.

**9.** Transmission par friction équipée de moyens mettant en oeuvre le procédé selon l'une quelconque des revendications précédentes.

**10.** Transmission par friction commandée conformément au procédé selon l'une quelconque des revendications 1 à 8.

**FIG. 1**

**FIG. 2**

**FIG. 3**

**FIG. 4**

**FIG. 5**

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1236935 A

- EP 2008053548 A